# EUROPEAN PATENT SPECIFICATION

(11) **EP 2 657 288 B1**
(45) Date of publication and mention of the grant of the patent: **26.08.2015**
(21) Application number: 11852008.9
(22) Date of filing: 22.12.2011
(51) Int. Cl.: C08L 25/04, C08K 5/09, C08K 5/20, C08K 5/3492, C08L 23/00

(54) **FLAME-RETARDANT STYRENE RESIN COMPOSITION, AND TONER CARTRIDGE CONTAINER PRODUCED USING SAME**
FEUERFESTE STYROLHARZZUSAMMENSETZUNG UND DARAUS HERGESTELLTER TONERKARTUSCHENBEHÄLTER
COMPOSITION IGNIFUGE DE RÉSINE DE STYRÈNE ET RÉCIPIENT DE CARTOUCHE DE TONER PRODUIT À PARTIR DE CELLE-CI

(30) Priority: 24.12.2010 JP 2010288853
(43) Date of publication of application: 30.10.2013
(73) Proprietor: Toyo Styrene Co., Ltd., Tokyo 105-0003 (JP)
(72) Inventor: KURATA, Toshiharu, Ichihara-shi Chiba 290-8588 (JP); KONNO, Katsunori, Ichihara-shi Chiba 290-8588 (JP)
(74) Representative: Gulde & Partner
(86) International application number: PCT/JP2011/079929
(87) International publication number: WO 2012/086810

(56) References cited:
- EP-A1- 0 735 084
- EP-A1- 1 449 880
- WO-A1-2009/084800
- WO-A1-2010/010561
- JP-A- 2004 115 601
- JP-A- 2004 346 105
- JP-A- 2010 090 339
- JP-A- 2010 090 339

## Description

### TECHNICAL FIELD

The present invention relates to a flame-retardant styrene resin composition excellent in the product strength, moldability and heat resistance.

### BACKGROUND ART

A rubber-modified styrene resin is excellent in the moldability and dimensional stability and is relatively inexpensive, and therefore, it is used in a wide range of applications. Particularly, a flame-retardant resin is used in various fields including e.g. office automation equipments such as word processors, personal computers, printers, copying machines, etc. and home electric appliances such as TV, VTR, audio devices, etc. A toner cartridge container is an internal component of e.g. a printer, facsimile machine or copying machine and tends to be made of an inexpensive material and designed to be thin-walled for economical efficiency and reduction in weight. Along with such a thin-walled structure design, the product strength has become important. For such a container, it has been proposed to use a specific bromine-type flame retardant, as disclosed in JP-A-9-109278. However, such a high melting point flame retardant is not melted at the processing temperature of a polystyrene resin composition and therefore tends to act as a foreign matter against the polystyrene resin phase being the matrix, thus bringing about deterioration in the product strength, particularly in the case of a thin-walled product. For example, there has been a problem such that as the product strength, the screw loosening torque after falling of an assembled product has decreased. Under such circumstances, it is required to improve the product strength. JP-A-9-109278 discloses addition of a higher fatty acid salt, fatty acid amide, polyethylene wax or the like, as a dispersant, but such addition is intended to disperse the flame retardant and flame retardancy-imparting auxiliary agent into the resin and is not intended to improve the product strength. The flame retardancy level required for a toner cartridge container is V-2. At a level of V-2, flame-quenching tends to be difficult, as the wall thickness becomes thick. Since the thinnest wall portion of the toner cartridge container is at most 2.0 mm, it is required to satisfy V-2 with the maximum thickness of 2 mm. Further, in recent years, it has been proposed to use tris(tribromophenoxy)triazine as a flame retardant, but it is limited to combined use with another flame retardant or a flame retardancy-imparting auxiliary agent, and no lubricant is used. Further, there is no disclosure or suggestion about improvement of a toner cartridge container (e.g. WO2003/035748).

EP 0 735 084 A1 discloses a flame-retardant styrene resin composition comprising a thermoplastic styrene resin, such as high impact polystyrene (HI-PS); 2,4,6-tris(2,4,6-tribromophenoxy)-1,3,5-triazine; a halogen-containing, phosphorus-containing or antimony-containing flame-retardant; an alkaline earth metal compound, such as a salt of Mg, Ca or Ba with a C₁₂₋₂₂ fatty acid.

EP 1 449 880 A1 and WO 2009/084800 A1 disclose further flame-retardant resin compositions comprising 2,4,6-tris(2,4,6-tribromophenoxy)-1,3,5-triazine as a flame-retardant.

### PRIO ART DOCUMENTS

### PATENT DOCUMENTS

Patent Document 1: JP-A-9-109278
Patent Document 2: WO2003/035748

### DISCLOSURE OF INVENTION

### TECHNICAL PROBLEM

It is an object of the present invention to provide a flame-retardant styrene resin composition which has a product strength (screw loosening torque after falling of an assembled product) improved and which is excellent in balance of the moldability (fluidity, mold releasability, abrasion resistance) and the heat resistance (deflection temperature under load).

### SOLUTION TO PROBLEM

The present inventors have conducted an extensive study for the above object and have accomplished the present invention by using a specific flame retardant and specific lubricants in combination within a specific range of their mass ratio.

The present invention provides the following constructions.
1. A flame-retardant styrene resin composition comprising 100 parts by mass of (A) a rubber-modified styrene resin, from 5.5 to 12 parts by mass of (B) a bromine-type flame retardant made of 2,4,6-tris(2,4,6-tribromophenoxy)-1,3,5-triazine, from 0.5 to 5 parts by mass of (C) a flame retardancy-imparting auxiliary agent, and from 0.5 to 1.6 parts by mass of (D) at least two lubricants selected from the group consisting of (a) a polyolefin wax, (b) a higher fatty acid amide and (c) a higher carboxylic acid metal salt, wherein the proportions of the respective lubricants are such that (a) is from 0 to 40 mass%, (b) is from 0 to 80 mass%, and (c) is from 0 to 80 mass%, provided that the total amount of (a), (b) and (c) is 100 mass%.
2. The flame-retardant styrene resin composition according to the above 1, wherein in (D) the lubricants, (a) is from 10 to 30 mass%, (b) is from 20 to 60 mass%, and (c) is from 20 to 60 mass%, provided that the total amount of (a), (b) and (c) is 100 mass%.
3. The flame-retardant styrene resin composition according to the above 1 or 2, which has a flame retardancy of at least V-2 in the UL94 burning test.
4. The flame-retardant styrene resin composition according to any one of the above 1 to 3, wherein in (D) the lubricants, (a) the polyolefin wax is polyethylene wax, (b) the higher fatty acid amide is ethylene bis-stearic acid amide, and (c) the higher carboxylic acid metal salt is calcium stearate and/or zinc stearate.
5. The flame-retardant styrene resin composition according to any one of the above 1 to 4, wherein in (A) the rubber-modified styrene resin, the content of the rubber component is from 3 to 15 mass%.
6. The flame-retardant styrene resin composition according to any one of the above 1 to 5, wherein in (A) the rubber-modified styrene resin, the rubber component is a high cis-polybutadiene rubber containing at least 90 mol% of cis-1,4-bond
7. The flame-retardant styrene resin composition according to any one of the above 1 to 6, wherein (C) the flame retardancy-imparting auxiliary agent is antimony oxide.
8. The flame-retardant styrene resin composition according to any one of the above 1 to 7, which is for a toner cartridge container.
9. A toner cartridge container obtainable by injection-molding the flame-retardant styrene resin composition for a toner cartridge container, as defined in the above 8.

### ADVANTAGEOUS EFFECTS OF INVENTION

The flame-retardant styrene resin composition of the present invention is a resin composition excellent in the product strength (screw loosening torque after falling of an assembled product) and excellent also in balance of the moldability (fluidity, mold releasability, abrasion resistance) and the heat resistance (deflection temperature under load). Taking advantage of such merits, it contributes to a progress in reduction of wall thickness of a toner cartridge container to be used as an internal component of a printer, facsimile machine or copying machine, and its industrial usefulness is very high.

### DESCRIPTION OF EMBODIMENTS

(A) The rubber-modified styrene resin (HIPS: high impact polystyrene) to be used in the present invention is a resin obtained by dissolving a rubber component in a styrene monomer, followed by thermal polymerization or polymerization by means of a polymerization initiator such as a peroxide and is disclosed, for example, in JP-A-8-27234. Its production process may be batch polymerization or continuous polymerization. The styrene monomer may, for example, be o-methylstyrene, m-methylstyrene, p-methylstyrene or 2,4-dimethylstyrene, but styrene is most preferred. One of these monomers may be used alone to produce a homopolymer, or two or more of them may be used in combination. Further, such a monomer may be used in combination with e.g. methacrylic acid, methyl methacrylate or the like copolymerizable therewith to obtain a copolymer.

As the rubber component, a homopolymer of butadiene, isoprene or the like, or a copolymer of butadiene with e.g. styrene or methyl methacrylate copolymerizable therewith may, for example, be used. The molecular structure of such a copolymer may be a random structure or a blocked structure, and may have a branched structure. As the rubber component, a high cis-polybutadiene rubber containing cis-1,4-bond at a rate of at least 90 mol% is particularly preferred.

Further, in the rubber-modified styrene resin, the content of the rubber component is preferably within a range of from 3 to 15 mass%, more preferably within a range of from 3 to 8 mass%.

Further, in the present invention, (A) the rubber-modified styrene resin may be used in combination with a polystyrene containing no rubber component (GPPS), for the purpose of adjusting the rubber component content, impact strength or fluidity as the resin composition.

(B) The bromine-type flame retardant to be used in the present invention is a bromine-type flame retardant represented by 2,4,6-tris(2,4,6-tribromophenoxy)-1,3,5-triazine, and is one known, for example, as Pyroguard SR 245, trade name (manufactured by Dai-ichi Kogyo Seiyaku Co., Ltd.).

(B) The bromine-type flame retardant is required to be from 5.5 to 12 parts by mass, preferably from 5.5 to 10 parts by mass, per 100 parts by mass of (A) the rubber-modified styrene resin. If the flame retardant is less than 5.5 parts by mass, the flame retardancy tends to be inferior, and the V-2 level in the UL94 burning test cannot be secured. The flame retardancy level required for a toner cartridge container is V-2. At a level of V-2, flame-quenching tends to be difficult, as the wall thickness becomes thick. Since the thinnest wall portion of the toner cartridge container is at most 2.0 mm, it is required to satisfy V-2 with the maximum thickness of 2 mm. On the other hand, if it exceeds 12 parts by mass, although the V-2 level in the UL94 burning test is satisfied, the product strength (screw loosening torque after falling of an assembled product) or the heat resistance (deflection temperature under load) decreases. Further, if another flame retardant is used, the product strength (screw loosening torque after falling of an assembled product) decreases.

In the present invention, (C) a flame retardancy-imparting auxiliary agent is used together with (B) the bromine-type flame retardant. The flame retardancy-imparting auxiliary agent is one which serves to further increase the flame-retarding effect of the flame retardant, and may, for example, be an antimony compound such as antimony trioxide, antimony tetroxide, antimony pentoxide or sodium antimonate; a boron compound such as zinc borate, barium metaborate, zinc boric anhydride or boric anhydride; a tin compound such as stannic oxide, zinc stannate or zinc hydroxystannate; a molybdenum compound such as molybdenum oxide or ammonium molybdate; a zirconium compound such as zirconium oxide or zirconium hydroxide; or a zinc compound such as zinc sulfide. Among them, it is particularly preferred to use antimony trioxide.

(C) The flame retardancy-imparting auxiliary agent is required to be used in an amount of from 0.5 to 5 parts by mass, more preferably from 0.5 to 3 parts by mass, per 100 parts by mass of (A) the rubber-modified styrene resin. If the flame retardancy-imparting auxiliary agent is less than 0.5 part by mass, the burning time tends to be long, and the flame retardancy cannot be secured. On the other hand, if it exceeds 5 parts by mass, the product strength tends to decrease.

As (D) the lubricants to be used in the present invention, at least two lubricants selected from the group consisting of (a) a polyolefin wax, (b) a higher fatty acid amide and (c) a higher carboxylic acid metal salt, are suitably combined and used in an amount of from 0.5 to 1.6 parts by mass per 100 parts by mass of (A) the rubber-modified styrene resin. Here, the proportions of the respective lubricants are such that (a) is from 0 to 40 mass%, (b) is from 0 to 80 mass%, and (c) is from 0 to 80 mass%, provided that the total amount of (a), (b) and (c) is 100 mass%.

(a) The polyolefin wax is a low molecular weight polyolefin having an olefin as a basic structural unit and having a weight average molecular weight of from 500 to 10,000 and may, for example, be a paraffin wax, a polyethylene wax, a polypropylene wax, an ethylene/vinyl acetate copolymer wax or a polyolefin ionomer wax. Preferred is a polyethylene wax and, for example, one known as LICOWAX-PE830, trade name (manufactured by Clariant (Japan) K.K.). (b) The higher fatty acid amide is a monoamide, bisamide or the like of a higher fatty acid, and may, for example, be a stearic acid amide, an oleic amide, an ercamide, a methylene bis-stearic acid amide, an ethylene bis-stearic acid amide or an ethylene bis-oleic amide. Preferred is an ethylene bis-stearic acid amide and, for example, one known as Kao Wax EBP, trade name (manufactured by Kao Corportion). (c) The higher carboxylic acid metal salt is a metal salt of a higher carboxylic acid and may, for example, be a stearic acid metal salt, a lauric acid metal salt or recinoleic acid metal salt. Preferred is a metal (such as Ca, Zn, Mg or Ba) salt of stearic acid, and (c) the higher carboxylic acid metal salt is particularly preferably calcium stearate and/or zinc stearate. As calcium stearate, Calcium Stearate G, trade name (manufactured by NOF CORPORATION) is, for example, known. As zinc stearate, Zinc Stearate GP, trade name (manufactured by NOF CORPORATION) is, for example, known.

If the amount of (a) the polyolefin wax exceeds 40 mass%, the product strength decreases. It is preferably at most 30 mass%. In consideration of the abrasion resistance, it is preferred that the polyolefin wax is contained in an amount of at least 10 mass%. If the amount of (b) the higher fatty acid amide exceeds 80 mass%, the heat resistance decreases. It is preferably at most 60 mass%. In consideration of the fluidity, it is preferred that the higher fatty acid amide is contained in an amount of at least 20 mass%. If (c) the higher carboxylic acid metal salt exceeds 80 mass%, the fluidity decreases. It is preferably at most 60 mass%. In consideration of the mold releasability, it is preferred that the higher carboxylic acid metal salt is contained in an amount of at least 20 mass%.

To the flame-retardant styrene resin composition of the present invention, it is possible to add, within a range not to exceed the scope of the present invention, various additives, for example, known additives such as a dye, a pigment, a coloring-preventive agent, an anti-aging agent, a light stabilizer, an anti-static agent, a filler, a compatibilizing agent, etc., a colorant such as titanium oxide or carbon black, an inorganic filler such as talc, calcium carbonate or glass fibers, and a modifier such as an elastomer component (SBS or hydrogenated SBS). The method for their addition is not particularly limited, and they may be added by a known method, for example, before initiation of the polymerization for (A) a rubber-modified styrene resin to be used, to a reaction solution during the polymerization or after completion of the polymerization, and at the time of blending (B) the bromine-type flame retardant and (C) the flame retardancy-imparting auxiliary agent, and also in an extruder or molding machine.

A method for obtaining the flame-retardant styrene resin composition of the present invention is not particularly limited, and a known mixing technique may be employed. For example, a mixture which has been preliminarily mixed by a mixing apparatus such as a mixer-type blender, a V-type blender or a tumbler-type mixer, may be melt-kneaded by e.g. a Banbury mixer, a kneader, a roll mill, a single screw extruder, a special single screw extruder or a twin screw extruder. Further, it is also possible to adopt a method of separately adding an additive such as a flame retardant in a halfway of the melt-kneading apparatus such as an extruder. As a method for adding the respective raw materials, (A) the rubber-modified styrene resin and (B) the bromine-type flame retardant, and, as the case requires, (C) the flame retardancy-imparting auxiliary agent, may be directly introduced into the above-mentioned kneading machine to obtain the resin composition, or within a range not to exceed the concept of the present invention, a resin, etc., (B) the bromine-type flame retardant and (C) the flame retardancy-imparting auxiliary agent, may preliminarily kneaded and pelletized to obtain a master batch, and this master batch and (A) the rubber-modified styrene resin may be introduced into the kneading machine. Further, as a method for their addition at the time of the polymerization, there is a method for obtaining a resin composition by adding (B) the bromine-type flame retardant and, as the case requires, (C) the flame reterdancy-imparting auxiliary agent at any one of stages i.e. to the solution before initiation of the polymerization for (A) the rubber-modified styrene resin, to the reaction solution during the polymerization or to the molten resin after completion of the polymerization.

The molding method for obtaining a molded product from the flame-retardant styrene resin composition of the present invention is not particularly limited, but injection molding is suitable for a toner cartridge container.

For evaluation of the product strength (screw loosening torque after falling of an assembled product) in the present invention, a boss breakaway torque is used as an alternative physical property. A test specimen of boss shape is molded, and it is tightened by a screw until the screw breaks loose, whereby the torque at that time is measured by a torque driver.

In the present invention, a melt flow rate is used as an index for the fluidity, and the measurement is carried out in accordance with JIS K7210. A deflection temperature under load is used as an index for the heat resistance, and the measurement is carried out in accordance with JIS K7191-2 (method A, flatwise). For evaluation of the mold releasability, using a release-resistant mold (dimension of the molded product: length×width×depth=130×60×45 mm), molding was continuously carried out by an injection molding machine and evaluated. For the abrasion resistance, a scratch which forms at a corner portion of a molded product at the time of opening the release-resistant mold, is visually inspected. As an index for flammability, UL94 burning test is used, and the measurement is carried out in accordance with a test method disclosed in UL 94 safety standards: a burning test for plastic materials for components of instruments.

### EXAMPLES

Now, the present invention will be described in further detail with reference to Examples, but it should be understood that the present invention is by no means limited thereto.
As (A) the rubber-modified styrene resin, one having HIPS Resin H870 manufactured by Toyo Styrene Co., Ltd. (type of rubber used: high cis-polybutadiene rubber containing cis-1,4-bond at a rate of at least 90 mol%) and GPPS Resin G210C manufactured by Toyo Styrene Co., Ltd., uniformly mixed so that the amount of the rubber component became 4 mass%, was used.
(B) Bromine-type flame retardant: Pyroguard SR 245, trade name [manufactured by Dai-ichi Kogyo Seiyaku Co., Ltd., 2,4,6-tris(2,4,6-tribromophenoxy)-1,3,5-triazine, bromine content: 68 mass%], and SAYTEX8010, trade name (manufactured by ALBEMARLE JAPAN CORPORATION, ethylene bispentabromobenzene, bromine content: 82 mass%) were used.
(C) Flame retardancy-imparting auxiliary agent: AT-3CN, trade name (manufactured by Suzuhiro Chemical Co., Ltd., antimony trioxide) was used.
(D) Lubricants: (a) LICOWAX·PE830, trade name (manufactured by Clariant (Japan) K.K., polyethylene wax), (b) Kao Wax EBP, trade name (manufactured by Kao Corporation, ethylene bis-stearic acid amide), and (c) Calcium Stearate G, trade name (manufactured by NOF CORPORATION, calcium stearate) or Zinc Stearate GP, trade name (manufactured by NOF CORPORATION, zinc stearate), were used.

### (Preparation of resin composition)

To 100 parts by mass of (A) the rubber-modified styrene resin, the parts by mass as shown in Tables 1 to 7, of (B) the bromine-type flame retardant, (C) the flame retardancy-imparting auxiliary agent and (D) the lubricants, were weighed and mixed by a Henschel mixer (FM20B, manufactured by Mitsui Miike Kako K.K.), and the obtained mixture was kneaded at 240°C by a screw feeder-equipped twin screw extruder (TEM26SS, manufactured by The Japan Steel Works, Ltd.) to obtain pellets of a resin composition.

### Extrusion Conditions:

Temperature set for cylinder: from 180°C (transportation site) to 240°C (kneading and measuring sites)
Screw rotational speed: 300 rpm
Extrusion rate: 30 kg/hr
Resin temperature: from 250 to 260°C (processing temperature)

To prepare a test specimen for a boss breakaway torque, the obtained pellets were heated and dried at a temperature of 70°C for 3 hours and then molded by an injection molding machine (J100E-P, manufactured by The Japan Steel Works, Ltd.) to obtain a boss test specimen having an inner diameter of 2.5 mm, an outer diameter of 7.0 mm and a depth of 10 mm. At that time, the cylinder temperature was 205°C, and the mold temperature was 45°C. Such a boss test specimen was tightened by a screw having a shape with a diameter of 2.9 mm and a length of 7.5 mm until the screw broke loose, and the torque at that time was measured by a torque driver 20DPSK (manufactured by Nakamura Corporation). If the strength is less than10 kgf, the product strength (screw loosening torque after falling of an assembled product) of a toner cartridge container becomes deficient, and therefore, a composition satisfying at least 10 kgf was regarded as acceptable.

The melt flow rate was measured in accordance with JIS K7210 with respect to the obtained pellets (test temperature: 200°C, test load: 49.03 N). If the fluidity is less than 6 g/10 min., molding of a toner cartridge container tends to be difficult, and therefore, a composition satisfying at least 6 g/10 min. was regarded as acceptable.

For measurement of the deflection temperature under load of a resin composition, the obtained pellets were heated and dried at a temperature of 70°C for 3 hours and then, molded by an injection molding machine (J100E-P, manufactured by The Japan Steel Works, Ltd.) to obtain A-type test specimen (dumbbell) as defined in JIS K7139. At that time, the cylinder temperature was 205°C, and the mold temperature was 45°C. Using a test specimen cut out from the center portion of the dumbbell specimen, the measurement was carried out in accordance with JIS K7191-2 (method A, flatwise). If the heat resistance is less than 72°C, the heat resistance of a toner cartridge container becomes deficient for use inside of a printer, facsimile machine or copying machine, and therefore, a composition satisfying at least 72°C was regarded as acceptable.

The mold releasability was evaluated in such a manner that the obtained pellets were heated and dried at a temperature of 70°C for 3 hours, then a release resistant mold (dimension of the molded product: lengthxwidthxdepth=130x60x45 mm) was attached to an injection molding machine (J100E-P, manufactured by The Japan Steel Works, Ltd.), and continuous molding (30 shots) was carried out at a cylinder temperature of 220°C and a mold temperature of 30°C and evaluated. The evaluation results were represented as follows. A composition evaluated to be ⊚ or ○ was regarded as acceptable.
⊚: No whitening was observed at a protruded position of a molded product.
○: Whitening was slightly observed at a protruded position of a molded product.
×: Whitening was distinctly observed at a protruded position of a molded product.

The abrasion resistance was evaluated by visually observing a scratch which forms at a corner portion of a molded product at the time of opening the mold for evaluation of the above mold releasability. The evaluation results were represented as follows. A composition evaluated to be ⊚ or ○ was regarded as acceptable.
⊚: No scratch was observed.
○: No scratch was observed, but powdering was slightly observed.
×: Scratches were distinctly observed.

### (Flammability)

As a test specimen for evaluation of the flammability, a test specimen for combustion of 127x12.7x2.0 mm was molded by an injection molding machine (J100E-P, manufactured by The Japan Steel Works, Ltd.). At that time, the cylinder temperature was 190°C, and the mold temperature was 30°C. A burning test was carried out in accordance with the vertical burning test method (UL94) of subject No. 94 by Underwriters Laboratories Inc., USA. One showing an excellent flame retardancy of at least V-2 in this test method, i.e. V-2, V-1, V-0, 5VB or 5VA, was regarded as acceptable.

The evaluation results are shown in Tables 1 to 7 together with the respective blend amounts of (A) the rubber-modified styrene resin, (B) the bromine-type flame retardant, (C) the flame retardancy-imparting auxiliary agent and (D) the lubricants.

**TABLE 1**

| | | | Unit | Ex. 1 | Ex. 2 | Ex. 3 | Ex. 4 | Ex. 5 | Ex. 6 |
|---|---|---|---|---|---|---|---|---|---|
| Composition | (A) | Rubber-modified styrene resin | Parts by mass | 100 | 100 | 100 | 100 | 100 | 100 |
| | (B) | SR245 | Parts by mass | 5.5 | 5.5 | 12.0 | 12.0 | 5.5 | 10.0 |
| | (C) | Antimony trioxide | Parts by mass | 0.5 | 5.0 | 0.5 | 5.0 | 3.0 | 0.5 |
| | (D) | Total of lubricants | Parts by mass | 1.2 | 1.2 | 1.2 | 1.2 | 1.2 | 1.2 |
| | (a) | Polyethylene wax | Parts by mass | 0.12 | 0.12 | 0.12 | 0.12 | 0.12 | 0.12 |
| | (b) | Ethylene bis-stearic acid amide | Parts by mass | 0.84 | 0.84 | 0.84 | 0.84 | 0.84 | 0.84 |
| | (c) | Calcium stearate | Parts by mass | 0.24 | 0.24 | 0.24 | 0.24 | 0.24 | 0.24 |
| Proportions of lubricants | (a) | Polyethylene wax | mass% | 10 | 10 | 10 | 10 | 10 | 10 |
| | (b) | Ethylene bis-stearic acid amide | mass% | 70 | 70 | 70 | 70 | 70 | 70 |
| | (c) | Higher carboxylic acid metal salt | mass% | 20 | 20 | 20 | 20 | 20 | 20 |
| Typical physical properties | (1) | Boss breakaway torque | kgf | 12 | 10 | 10 | 10 | 12 | 12 |
| | (2) | Melt flow rate | g/10 min | 7.3 | 6.9 | 8.2 | 7.6 | 7.5 | 7.8 |
| | (3) | Deflection temperature under load | °C | 72.8 | 72.5 | 72.2 | 72.2 | 72.9 | 72.6 |
| | (4) | Mold releasability | - | ⊚ | ⊚ | ⊚ | ⊚ | ⊚ | ⊚ |
| | (5) | Abrasion resistance | - | ⊚ | ⊚ | ⊚ | ⊚ | ⊚ | ⊚ |
| | (6) | Burning test (2 mm) | UL94 | V-2 | V-2 | V-2 | V-2 | V-2 | V-2 |

**TABLE 2**

| | | | Unit | Ex. 7 | Ex. 8 | Ex. 9 | Ex. 10 | Ex. 11 | Ex. 12 |
|---|---|---|---|---|---|---|---|---|---|
| Composition | (A) | Rubber-modified styrene resin | Parts by mass | 100 | 100 | 100 | 100 | 100 | 100 |
| | (B) | SR245 | Parts by mass | 10.0 | 8.4 | 6.0 | 6.0 | 6.0 | 6.0 |
| | (C) | Antimony trioxide | Parts by mass | 3.0 | 1.7 | 1.0 | 1.0 | 1.0 | 1.0 |
| | (D) | Total of lubricants | Parts by mass | 1.2 | 1.2 | 1.2 | 1.2 | 1.2 | 1.2 |
| | (a) | Polyethylene wax | Parts by mass | 0.12 | 0.12 | 0.48 | 0.48 | 0.24 | 0.00 |
| | (b) | Ethylene bis-stearic acid amide | Parts by mass | 0.84 | 0.84 | 0.00 | 0.72 | 0.00 | 0.24 |
| | (c) | Calcium stearate | Parts by mass | 0.24 | 0.24 | 0.72 | 0.00 | 0.96 | 0.96 |
| Proportions of lubricants | (a) | Polyethylene wax | mass% | 10 | 10 | 40 | 40 | 20 | 0 |
| | (b) | Ethylene bis-stearic acid amide | mass% | 70 | 70 | 0 | 60 | 0 | 20 |
| | (c) | Higher carboxylic acid metal salt | mass% | 20 | 20 | 60 | 0 | 80 | 80 |
| Typical physical properties | (1) | Boss breakaway torque | kgf | 12 | 12 | 10 | 10 | 12 | 12 |
| | (2) | Melt flow rate | g/10 min | 7.9 | 7.7 | 6.0 | 7.0 | 6.1 | 6.0 |
| | (3) | Deflection temperature under load | °C | 72.5 | 72.6 | 76.2 | 72.9 | 76.2 | 75.1 |
| | (4) | Mold releasability | - | ⊚ | ⊚ | ⊚ | ○ | ⊚ | ⊚ |
| | (5) | Abrasion resistance | - | ⊚ | ⊚ | ⊚ | ⊚ | ⊚ | ○ |
| | (6) | Burning test (2 mm) | UL94 | V-2 | V-2 | V-2 | V-2 | V-2 | V-2 |

**TABLE 3**

| | | | Unit | Ex. 13 | Ex. 14 | Ex. 15 | Ex. 16 | Ex. 17 | Ex. 18 |
|---|---|---|---|---|---|---|---|---|---|
| Composition | (A) | Rubber-modified styrene resin | Parts by mass | 100 | 100 | 100 | 100 | 100 | 100 |
| | (B) | SR245 | Parts by mass | 6.0 | 6.0 | 6.0 | 6.0 | 6.0 | 6.0 |
| | (C) | Antimony trioxide | Parts by mass | 1.0 | 1.0 | 1.0 | 1.0 | 1.0 | 1.0 |
| | (D) | Total of lubricants | Parts by mass | 1.2 | 1.2 | 1.2 | 1.2 | 1.2 | 1.2 |
| | (a) | Polyethylene wax | Parts by mass | 0.24 | 0.00 | 0.36 | 0.12 | 0.36 | 0.12 |
| | (b) | Ethylene bis-stearic acid amide | Parts by mass | 0.96 | 0.96 | 0.24 | 0.36 | 0.60 | 0.72 |
| | (c) | Calcium stearate | Parts by mass | 0.00 | 0.24 | 0.60 | 0.72 | 0.24 | 0.36 |
| Proportions of lubricants | (a) | Polyethylene wax | mass% | 20 | 0 | 30 | 10 | 30 | 10 |
| | (b) | Ethylene bis-stearic acid amide | mass% | 80 | 80 | 20 | 30 | 50 | 60 |
| | (c) | Higher carboxylic acid metal salt | mass% | 0 | 20 | 50 | 60 | 20 | 30 |
| Typical physical properties | (1) | Boss breakaway torque | kgf | 11 | 12 | 14 | 15 | 14 | 15 |
| | (2) | Melt flow rate | g/10 min | 7.9 | 8.0 | 6.4 | 6.5 | 6.8 | 7.2 |
| | (3) | Deflection temperature under load | °C | 72.4 | 72.3 | 75.2 | 74.7 | 73.6 | 73.2 |
| | (4) | Mold releasability | - | ○ | ⊚ | ⊚ | ⊚ | ⊚ | ⊚ |
| | (5) | Abrasion resistance | - | ⊚ | ○ | ⊚ | ⊚ | ⊚ | ⊚ |
| | (6) | Burning test (2 mm) | UL94 | V-2 | V-2 | V-2 | V-2 | V-2 | V-2 |

**TABLE 4**

| | | | Unit | Ex. 19 | Ex. 20 | Ex. 21 | Ex. 22 |
|---|---|---|---|---|---|---|---|
| Composition | (A) | Rubber-modified styrene resin | Parts by mass | 100 | 100 | 100 | 100 |
| | (B) | SR245 | Parts by mass | 6.0 | 6.0 | 6.0 | 8.3 |
| | (C) | Antimony trioxide | Parts by mass | 1.0 | 1.0 | 1.1 | 1.7 |
| | (D) | Total of lubricants | Parts by mass | 1.2 | 1.6 | 1.2 | 1.2 |
| | (a) | Polyethylene wax | Parts by mass | 0.30 | 0.16 | 0.12 | 0.12 |
| | (b) | Ethylene bis-stearic acid amide | Parts by mass | 0.50 | 1.12 | 0.84 | 0.84 |
| | (c) | Calcium stearate | Parts by mass | 0.40 | 0.32 | 0.00 | 0.24 |
| | (c) | Zinc stearate | Parts by mass | 0.00 | 0.00 | 0.24 | 0.00 |
| Proportions of lubricants | (a) | Polyethylene wax | mass% | 25 | 10 | 10 | 10 |
| | (b) | Ethylene bis-stearic acid amide | mass% | 42 | 70 | 70 | 70 |
| | (c) | Higher carboxylic acid metal salt | mass% | 33 | 20 | 20 | 20 |
| Typical physical properties | (1) | Boss breakaway torque | kgf | 15 | 10 | 12 | 12 |
| | (2) | Melt flow rate | g/10 min | 6.5 | 8.3 | 7.8 | 8.0 |
| | (3) | Deflection temperature under load | °C | 73.9 | 72.2 | 72.4 | 72.4 |
| | (4) | Mold releasability | - | ⊚ | ⊚ | ⊚ | ⊚ |
| | (5) | Abrasion resistance | - | ⊚ | ⊚ | ⊚ | ⊚ |
| | (6) | Burning test (2 mm) | UL94 | V-2 | V-2 | V-2 | V-2 |

**TABLE 5**

| | | | Unit | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Composition | (A) | Rubber-modified styrene resin | Parts by mass | 100 | 100 | 100 | 100 | 100 | 100 |
| | (B) | SR245 | Parts by mass | 4.9 | 5.0 | 13.0 | 13.0 | 13.0 | 6.0 |
| | (C) | Antimony trioxide | Parts by mass | 0.0 | 6.0 | 0.0 | 6.0 | 6.0 | 1.0 |
| | (D) | Total of lubricants | Parts by mass | 1.2 | 1.2 | 1.2 | 1.2 | 1.2 | 0.0 |
| | (a) | Polyethylene wax | Parts by mass | 0.12 | 0.12 | 0.12 | 0.12 | 0.00 | 0.00 |
| | (b) | Ethylene bis-stearic acid amide | Parts by mass | 0.84 | 0.84 | 0.84 | 0.84 | 0.90 | 0.00 |
| | (c) | Calcium stearate | Parts by mass | 0.24 | 0.24 | 0.24 | 0.24 | 0.30 | 0.00 |
| Proportions of lubricants | (a) | Polyethylene wax | mass% | 10 | 10 | 10 | 10 | 0 | 0 |
| | (b) | Ethylene bis-stearic acid amide | mass% | 70 | 70 | 70 | 70 | 75 | 0 |
| | (c) | Higher carboxylic acid metal salt | mass% | 20 | 20 | 20 | 20 | 25 | 0 |
| Typical physical properties | (1) | Boss breakaway torque | kgf | 12 | 8 | 8 | 8 | 9 | 18 |
| | (2) | Melt flow rate | g/10 min | 6.8 | 7.0 | 9.1 | 8.2 | 7.9 | 5.1 |
| | (3) | Deflection temperature under load | °C | 72.5 | 72.2 | 70.9 | 71.2 | 70.9 | 75.2 |
| | (4) | Mold releasability | - | ⊚ | ⊚ | ⊚ | ⊚ | ⊚ | × |
| | (5) | Abrasion resistance | - | ⊚ | ⊚ | ⊚ | ⊚ | ○ | × |
| | (6) | Burning test (2 mm) | UL94 | NG | NG | NG | V-2 | V-2 | V-2 |

**TABLE 6**

| | | | Unit | Comp. Ex. 7 | Comp. Ex. 8 | Comp. Ex. 9 | Comp. Ex. 10 | Comp. Ex. 11 | Comp. Ex. 12 |
|---|---|---|---|---|---|---|---|---|---|
| Composition | (A) | Rubber-modified styrene resin | Parts by mass | 100 | 100 | 100 | 100 | 100 | 100 |
| | (B) | SR245 | Parts by mass | 6.0 | 6.0 | 6.0 | 6.0 | 6.0 | 6.0 |
| | (C) | Antimony trioxide | Parts by mass | 1.0 | 1.0 | 1.0 | 1.0 | 1.0 | 1.0 |
| | (D) | Total of lubricants | Parts by mass | 0.4 | 1.8 | 1.2 | 1.2 | 1.2 | 1.2 |
| | (a) | Polyethylene wax | Parts by mass | 0.04 | 0.18 | 0.60 | 0.60 | 1.20 | 0.12 |
| | (b) | Ethylene bis-stearic acid amide | Parts by mass | 0.28 | 1.26 | 0.00 | 0.60 | 0.00 | 1.08 |
| | (c) | Calcium stearate | Parts by mass | 0.08 | 0.36 | 0.60 | 0.00 | 0.00 | 0.00 |
| Proportions of lubricants | (a) | Polyethylene wax | mass% | 10 | 10 | 50 | 50 | 100 | 10 |
| | (b) | Ethylene bis-stearic acid amide | mass% | 70 | 70 | 0 | 50 | 0 | 90 |
| | (c) | Higher carboxylic acid metal salt | mass% | 20 | 20 | 50 | 0 | 0 | 0 |
| Typical physical properties | (1) | Boss breakaway torque | kgf | 17 | 8 | 7 | 8 | 4 | 11 |
| | (2) | Melt flow rate | g/10 min | 5.9 | 8.7 | 5.4 | 6.6 | 4.8 | 8.3 |
| | (3) | Deflection temperature under load | °C | 74.4 | 71.3 | 76.2 | 73.4 | 75.4 | 71.5 |
| | (4) | Mold releasability | - | × | ⊚ | ⊚ | ○ | ○ | ○ |
| | (5) | Abrasion resistance | - | × | ⊚ | ⊚ | ⊚ | ⊚ | ⊚ |
| | (6) | Burning test (2 mm) | UL94 | V-2 | V-2 | V-2 | V-2 | V-2 | V-2 |

**TABLE 7**

| | | | Unit | Comp. Ex. 13 | Comp. Ex. 14 | Comp. Ex. 15 | Comp. Ex. 16 | Comp. Ex. 17 | Comp. Ex. 18 |
|---|---|---|---|---|---|---|---|---|---|
| Composition | (A) | Rubber-modified styrene resin | Parts by mass | 100 | 100 | 100 | 100 | 100 | 100 |
| | (B) | SR245 | Parts by mass | 6.0 | 6.0 | 6.0 | 6.0 | 6.0 | 0.0 |
| | | SAYTEX8010 | Parts by mass | 0.0 | 0.0 | 0.0 | 0.0 | 0.0 | 6.8 |
| | (C) | Antimony trioxide | Parts by mass | 1.0 | 1.0 | 1.0 | 1.0 | 1.0 | 1.7 |
| | (D) | Total of lubricants | Parts by mass | 1.2 | 1.2 | 1.2 | 1.2 | 1.2 | 1.2 |
| | (a) | Polyethylene wax | Parts by mass | 0.00 | 0.00 | 0.12 | 0.00 | 0.00 | 0.12 |
| | (b) | Ethylene bis-stearic acid amide | Parts by mass | 1.08 | 1.20 | 0.00 | 0.12 | 0.00 | 0.84 |
| | (c) | Calcium stearate | Parts by mass | 0.12 | 0.00 | 1.08 | 1.08 | 1.20 | 0.24 |
| Proportions of lubricants | (a) | Polyethylene wax | mass% | 0 | 0 | 10 | 0 | 0 | 10 |
| | (b) | Ethylene bis-stearic acid amide | mass% | 90 | 100 | 0 | 10 | 0 | 70 |
| | (c) | Higher carboxylic acid metal salt | mass% | 10 | 0 | 90 | 90 | 100 | 20 |
| Typical physical properties | (1) | Boss breakaway torque | kgf | 11 | 11 | 12 | 12 | 12 | 8 |
| | (2) | Melt flow rate | g/10 min | 8.3 | 8.7 | 5.6 | 5.4 | 5.2 | 10.0 |
| | (3) | Deflection temperature under load | °C | 71.5 | 70.9 | 76.1 | 75.6 | 76.0 | 71.9 |
| | (4) | Mold releasability | - | ○ | ○ | ⊚ | ⊚ | ⊚ | ⊚ |
| | (5) | Abrasion resistance | - | ○ | ○ | ⊚ | ○ | ○ | ⊚ |
| | (6) | Burning test (2 mm) | UL94 | V-2 | V-2 | V-2 | V-2 | V-2 | V-2 |

### (With respect to Examples and Comparative Examples)

As is evident from Tables 1 to 4, Examples 1 to 22 present flame-retardant styrene resin compositions of the present invention, which are excellent in the product strength (boss breakaway torque), the moldability (fluidity, mold releasability, abrasion resistance) and the heat resistance (deflection temperature under load), as intended by the present invention.

In Examples 1 to 8 in Tables 1 and 2, the proportions of (D) the respective lubricants are fixed, while the proportions of (B) the bromine-type flame retardant and (C) the flame retardancy-imparting auxiliary agent are varied within the ranges defined by the present invention. It is evident that particularly Examples 1 and 5 to 8 present highly balanced flame-retardant styrene resin compositions for toner cartridge containers, which are excellent in the product strength and the heat resistance and have high melt flow rates.

In Examples 9 to 20 in Tables 2 to 4, the proportions of (B) the bromine-type flame retardant and (C) the flame retardancy-imparting auxiliary agent are fixed, while the proportions of (D) the respective lubricants are varied within the ranges defined by the present invention. It is evident that particularly Examples 15 to 19 present highly balanced flame-retardant styrene resin compositions which are excellent in the product strength, the moldability and the heat resistance.

In contrast to such Examples, in Comparative Example 1 in Table 5, the amounts of (B) the bromine-type flame retardant and (C) the flame retardancy-imparting auxiliary agent incorporated, are less than the lower limits defined by the present invention, whereby the flame retardancy is no good, although the product strength is acceptable. In Comparative Example 2, the amount of (B) the bromine-type flame retardant incorporated, is less than the lower limit defined by the present invention, and the amount of (C) the flame retardancy-imparting auxiliary agent incorporated, exceeds the upper limit defined by the present invention, whereby both the product strength and the flame retardancy are no good. In Comparative Example 3, the amount of (B) the bromine-type flame retardant incorporated, exceeds the upper limit defined by the present invention, and the amount of (C) the flame retardancy-imparting auxiliary agent incorporated, is less than the lower limit defined by the present invention, and in Comparative Example 4, the amounts of (B) the bromine-type flame retardant and (C) the flame retardancy-imparting auxiliary agent incorporated, exceed the respective upper limits defined by the present invention, whereby in both cases, the product strength deteriorates. In Comparative Example 5, the amounts of (B) the bromine-type flame retardant and (C) the flame retardancy-imparting auxiliary agent incorporated, are the same as in Comparative Example 4, and (a) a polyolefin wax is not contained in (D) the lubricants, whereby the product strength is no good.

In Comparative Examples 6 and 7 in Tables 5 and 6, the amount of (D) the lubricants incorporated, is less than the lower limit defined by the present invention, whereby the mold releasability and the abrasion resistance are no good. In Comparative Example 8, the amount of (D) the lubricants incorporated, exceeds the upper limit defined by the present invention, whereby the product strength deteriorates.

In Comparative Examples 9 to 17 in Tables 6 and 7, the proportions of (D) the respective lubricants are outside the ranges defined by the present invention. In Comparative Examples 9 to 11, the amount of (a) the polyolefin wax exceeds the upper limit defined by the present invention, whereby the product strength deteriorates. In Comparative Examples 12 to 14, the amount of (b) the higher fatty acid amide exceeds the upper limit defined by the present invention, whereby the heat resistance decreases. In Comparative Examples 15 to 17, the amount of (c) the higher carboxylic acid metal salt exceeds the upper limit defined by the present invention, whereby the fluidity is deficient.

In Comparative Example 18 in Table 7, (B) the bromine-type flame retardant used, is different from the present invention. The amount of the flame retardant is adjusted so that the bromine amount in the composition becomes to be the same (5 mass%) as between Comparative Example 18 and Example 22, but in Comparative Example 18, the product strength deteriorates as compared with the product strength in Example 22.

### INDUSTRIAL APPLICABILITY

The flame-retardant styrene resin composition of the present invention is useful for producing a toner cartridge container to be used as an internal component of a printer, facsimile machine or copying machine.

## Claims

1. A flame-retardant styrene resin composition comprising 100 parts by mass of (A) a rubber-modified styrene resin, from 5.5 to 12 parts by mass of (B) a bromine-type flame retardant made of 2,4,6-tris(2,4,6-tribromophenoxy)-1,3,5-triazine, from 0.5 to 5 parts by mass of (C) a flame retardancy-imparting auxiliary agent, and from 0.5 to 1.6 parts by mass of (D) at least two lubricants selected from the group consisting of (a) a polyolefin wax, (b) a higher fatty acid amide and (c) a higher carboxylic acid metal salt, wherein the proportions of the respective lubricants are such that (a) is from 0 to 40 mass%, (b) is from 0 to 80 mass%, and (c) is from 0 to 80 mass%, provided that the total amount of (a), (b) and (c) is 100 mass%.

2. The flame-retardant styrene resin composition according to Claim 1, wherein in (D) the lubricants, (a) is from 10 to 30 mass%, (b) is from 20 to 60 mass%, and (c) is from 20 to 60 mass%, provided that the total amount of (a), (b) and (c) is 100 mass%.

3. The flame-retardant styrene resin composition according to Claim 1 or 2, which has a flame retardancy of at least V-2 in the UL94 burning test.

4. The flame-retardant styrene resin composition according to any one of Claims 1 to 3, wherein in (D) the lubricants, (a) the polyolefin wax is polyethylene wax, (b) the higher fatty acid amide is ethylene bis-stearic acid amide, and (c) the higher carboxylic acid metal salt is calcium stearate and/or zinc stearate.

5. The flame-retardant styrene resin composition according to any one of Claims 1 to 4, wherein in (A) the rubber-modified styrene resin, the content of the rubber component is from 3 to 15 mass%.

6. The flame-retardant styrene resin composition according to any one of Claims 1 to 5, wherein in (A) the rubber-modified styrene resin, the rubber component is a high cis-polybutadiene rubber containing at least 90 mol% of cis-1,4-bond

7. The flame-retardant styrene resin composition according to any one of Claims 1 to 6, wherein (C) the flame retardancy-imparting auxiliary agent is antimony oxide.

8. The flame-retardant styrene resin composition according to any one of Claims 1 to 7, which is for a toner cartridge container.

9. A toner cartridge container obtainable by injection-molding the flame-retardant styrene resin composition for a toner cartridge container, as defined in Claim 8.

## Patentansprüche

1. Schwer entflammbare Styrolharzzusammensetzung, umfassend 100 Masseteile (A) eines kautschukmodifizierten Styrolharzes, 5,5 bis 12 Masseteile (B) eines Flammschutzmittels vom Bromtyp aus 2,4,6-Tris(2,4,6-tribromphenoxy)-1,3,5-triazin, 0,5 bis 5 Masseteile (C) eines Schwerentflammbarkeit verleihenden Hilfsstoffs und 0,5 bis 1,6 Masseteile (D) wenigstens zweier Gleitmittel, die aus der Gruppe bestehend aus (a) einem Polyolefinwachs, (b) einem höheren Fettsäureamid und (c) einem höheren Carbonsäuremetallsalz ausgewählt sind, wobei die Anteile der jeweiligen Gleitmittel derart sind, dass (a) 0 bis 40 Masse% beträgt, (b) 0 bis 80 Masse% beträgt und (c) 0 bis 80 Masse% beträgt, mit der Maßgabe, dass die Gesamtmenge von (a), (b) und (c) 100 Masse% beträgt.

2. Schwer entflammbare Styrolharzzusammensetzung nach Anspruch 1, wobei in den Gleitmitteln (D), (a) 10 bis 30 Masse% beträgt, (b) 20 bis 60 Masse% beträgt und (c) 20 bis 60 Masse% beträgt, mit der Maßgabe, dass die Gesamtmenge von (a), (b) und (c) 100 Masse% beträgt.

3. Schwer entflammbare Styrolharzzusammensetzung nach Anspruch 1 oder 2, die im UL94-Brandtest eine Schwerentflammbarkeit von mindestens V-2 aufweist.

4. Schwer entflammbare Styrolharzzusammensetzung nach einem der Ansprüche 1 bis 3, wobei in den Gleitmitteln (D), (a) das Polyolefinwachs Polyethylenwachs ist, (b) das höhere Fettsäureamid Ethylen-bis-stearinsäureamid ist und (c) das höhere Carbonsäuremetallsalz Calciumstearat und/oder Zinkstearat ist.

5. Schwer entflammbare Styrolharzzusammensetzung nach einem der Ansprüche 1 bis 4, wobei in dem kautschukmodifizierten Styrolharz (A) der Gehalt der Kautschukkomponente 3 bis 15 Masse% beträgt.

6. Schwer entflammbare Styrolharzzusammensetzung nach einem der Ansprüche 1 bis 5, wobei in dem kautschukmodifizierten Styrolharz (A) die Kautschukkomponente ein hoher cis-Polybutadienkautschuk ist, der mindestens 90 Mol% cis-1,4-Bindungen enthält.

7. Schwer entflammbare Styrolharzzusammensetzung nach einem der Ansprüche 1 bis 6, wobei der Schwerentflammbarkeit verleihende Hilfsstoff (C) Antimonoxid ist.

8. Schwer entflammbare Styrolharzzusammensetzung nach einem der Ansprüche 1 bis 7, die für einen Tonerkartuschenbehälter vorgesehen ist.

9. Tonerkartuschenbehälter, erhältlich durch Spritzgießen der schwer entflammbaren Styrolharzzusammensetzung für einen Tonerkartuschenbehälter entsprechend der Definition in Anspruch 8.

## Revendications

1. Une composition de résine de styrène ignifuge comprenant 100 parties en masse de (A) une résine de styrène modifiée par un caoutchouc, de 5,5 à 12 parties en masse de (B) un ignifugeant de type bromique composé de 2,4,6-tris(2,4,6-tribromophénoxy)-1,3,5-triazine, de 0,5 à 5 parties en masse de (C) un agent auxiliaire conférant des propriétés ignifugeantes, et de 0,5 à 1,6 parties en masse de (D) au moins deux lubrifiants sélectionnés parmi le groupe composé de (a) une cire de polyoléfine, (b) un amide d'acide gras supérieur et (c) un sel de métal d'acide carboxylique supérieur, les proportions des lubrifiants respectifs étant telles que (a) est de 0 à 40 % massique, (b) est de 0 à 80 % massique et (c) est de 0 à 80 % massique, pour autant que la quantité totale de (a), (b) et (c) est égale à 100 % massique.

2. La composition de résine de styrène ignifuge selon la revendication 1, les lubrifiants dans (D) étant (a) de 10 à 30 % massique, (b) de 20 à 60 % massique et (c) de 20 à 60 % massique, pour autant que la quantité totale de (a), (b) et (c) est de 100 % massique.

3. La composition de résine de styrène ignifuge selon la revendication 1 ou 2, ayant des propriétés ignifugeantes de V-2 au moins dans l'essai d'inflammabilité UL94.

4. La composition de résine de styrène ignifuge selon l'une quelconque des revendications 1 à 3, les lubrifiants dans (D) étant (a) la cire de polyoléfine la cire de polyéthylène, (b) l'amide d'acide gras supérieur l'éthylène bis(stéaramide) et (c) le sel de métal d'acide carboxylique supérieur un stéarate de calcium et/ou un stéarate de zinc.

5. La composition de résine de styrène ignifuge selon l'une quelconque des revendications 1 à 4, le contenu du composant caoutchouc étant de 3 à 15 % massique dans (A) la résine de styrène modifiée par un caoutchouc.

6. La composition de résine de styrène ignifuge selon l'une quelconque des revendications 1 à 5, le caoutchouc étant un caoutchouc polybutadiène à haute teneur en cis contenant au moins 90 %mol de liaisons 1,4-cis, dans (A) la résine de styrène modifiée par un caoutchouc.

7. La composition de résine de styrène ignifuge selon l'une des revendications 1 à 6, (C) l'agent auxiliaire conférant des propriétés ignifuges étant un oxyde d'antimoine.

8. La composition de résine de styrène ignifuge selon l'une des revendications 1 à 7 étant pour un récipient de cartouche de toner.

9. Un récipient de cartouche de toner obtenu par moulage par injection de la composition de résine de styrène ignifuge pour un récipient de cartouche de toner, tel que défini dans la revendication 8.
